# EUROPÄISCHE PATENTSCHRIFT

(11) **EP 3 278 065 B1**
(45) Veröffentlichungstag und Bekanntmachung des Hinweises auf die Patenterteilung: **03.12.2025**
(21) Anmeldenummer: 16723242.0
(22) Anmeldetag: 30.03.2016
(51) Int. Cl.: G01F 1/24, G01F 1/26

(54) **VORRICHTUNG ZUR BESTIMMUNG EINER MOMENTANEN DURCHFLUSSRATE EINES FLIESSFAHIGEN MEDIUMS**
DEVICE FOR DETERMINING A CURRENT FLOW RATE OF A FLOWABLE MEDIUM
DISPOSITIF SERVANT A DETERMINER UN DEBIT INSTANTANE D'UN MILIEU FLUIDE

(30) Priorität: 30.03.2015 DE 102015003984
(43) Veröffentlichungstag der Anmeldung: 07.02.2018
(73) Patentinhaber: MFT MEISTER FLOW TECHNOLOGY HOLDING GMBH & CO. KG, 63831 Wiesen (DE)
(72) Erfinder: BIRKMANN, Bernhard, 63831 Wiesen (DE); KAUTZSCH, Thorsten, 63831 Wiesen (DE); MASCHIK, Jochen, 63831 Wiesen (DE)
(74) Vertreter: Nitz, Astrid
(86) Internationale Anmeldenummer: PCT/DE2016/000136
(87) Internationale Veröffentlichungsnummer: WO 2016/155693

(56) Entgegenhaltungen:
- EP-B1- 1 505 372
- WO-A1-2009/010742
- DE-A1- 102011 084 243
- DE-A1- 2 043 252
- US-A- 2 293 988

## Beschreibung

Die Erfindung betrifft eine Vorrichtung zur Bestimmung einer momentanen Durchflussrate eines fließfähigen Mediums nach dem Oberbegriff von Anspruch 1.

DE 10 2011 084 243 A1 offenbart einen mechatronischen Strömungssensor. DE 2 043 252 offenbart ein Durchflussmessgerät mit einem Schwebekörper. WO 2009/010742 A1 offenbart eine Rohrverbindung mit einem integrierten Filter und einem Flussmesser.

Die bekannten Strömungswächter des Stands der Technik sind auf enge Messbereiche und geringe Spannung beschränkt und komplex aufgebaut.

Aufgabe der vorliegenden Erfindung ist es, eine Vorrichtung zur Bestimmung einer momentanen Durchflussrate eines fließfähigen Mediums bereitzustellen, die eine einfache und sichere Messung einer Durchflussrate ermöglicht.

Die Aufgabe wird gelöst durch eine Vorrichtung zur Bestimmung einer momentanen Durchflussrate eines fließfähigen Mediums mit einem Messgehäuseabschnitt zur Aufnahme von Messmitteln, mit einem Messleitungsabschnitt, durch den das fließfähige Medium hindurch strömen kann, wodurch ein Schwebekörper, der mit einem Messabschnitt in das fließfähige Medium hineinragt, anhebbar ist, wobei der Schwebekörper mit einem Führungsabschnitt verbunden ist, der in den Messgehäuseabschnitt hineinragt, wobei in einem Haltebereich, insbesondere Endbereich, des Führungsabschnitts ein Signalmittel, ein Magnetmittel, angeordnet ist, wobei benachbart zu dem Signalmittel, Magnetmittel, an dem Haltebereich des Führungsabschnitts des Schwebekörpers ein insbesondere höhenverstellbarer Positionssensor für die Registrierung der Bewegung eines Signalmittels, Magnetmittels, angeordnet ist, insbesondere ein Reed-Kontakt und/oder Hallsensor, im Wesentlichen ortsfest in Bezug auf den äußeren Messgehäuseabschnitt, wobei der Positionssensor, insbesondere der Reed-Kontakt und/oder Hallsensor, in Folge einer durch die Schwebekörperbewegung hervorgerufene Magnetmittelbewegung aktivierbar ist, wobei der Messgehäuseabschnitt an einem Seitenbereich des Messleitungsabschnitts angeordnet ist in einem vorbestimmten Winkel, insbesondere ungleich etwa 90°, in einem in Bezug auf eine Fließrichtung des fließfähigen Mediums angepassten Winkel, wobei der Messleitungsabschnitt zumindest einen Teil eines y-förmigen Rohrabschnitts umfasst, wobei an einen anderen Schenkel der Messgehäuseabschnitt anzusetzen ist, wobei der Schwebekörper eine zylindrisch konvexe und/oder annähernd drehkegelige Form aufweist, wobei in dem Messgehäuseabschnitt ein Rohrleitungsabschnitt angeordnet ist, der ein Fenster aufweist, das überwiegend transparentes Material umfasst, so dass eine optische Erfassung der Position des Schwebekörpers möglich ist, beispielsweise durch eine Kamera oder licht- und/oder farbempfindliche Sensoren.

Durch die vorliegende Erfindung wird es unter Anderem vermieden, dass der Querschnitt des Messleitungsabschnitts durch einen Schwebekörper und dadurch die Durchflussrate reduziert wird. Die Schmutzempfindlichkeit wird herabgesetzt, die durch kleine Bohrungen und Ringspalte entsteht. Die Empfindlichkeit gegenüber Druckstößen ist herabgesetzt. Die elektrischen Ströme und Spannungen sind nicht beschränkt.

Als Signalmittel können beispielsweise auch induktive und/oder kapazitive Sensoren eingesetzt werden, die auf eine Annäherung von Signalgebern, insbesondere von metallischen Leitern, reagieren. Weiterhin ist beispielsweise eine optische Erfassung der Position des Schwebekörpers möglich, beispielsweise durch eine Kamera oder licht- und/oder farbempfindliche Sensoren. Insbesondere können verschiedene Arten von Näherungssensoren eingesetzt werden, beispielsweise magnetisch im Bereich der Reed-Sensoren und/oder Hallsensoren und/oder nichtmagnetisch im Bereich der induktiven und/oder kapazitiven Sensoren.

Die erfindungsgemäße Vorrichtung erlaubt es, auf einfache und sichere Weise auch größere Schaltleistungen zu handhaben. Es muss insbesondere bei dem Reed-Kontakt keine Betriebsspannung angelegt werden bzw. es kann potentialfrei gearbeitet werden, was die Sicherheit und Zuverlässigkeit weiter erhöht.

Vorteilhaft ist es, wenn der Messgehäuseabschnitt an einem Seitenbereich des Messleitungsabschnitts angeordnet ist in einem vorbestimmten Winkel, insbesondere ungleich etwa 90°, insbesondere in einem in Bezug auf eine Fließrichtung des fließfähigen Mediums angepassten Winkel.

Vorteilhaft ist es, wenn der Schwebekörper eine angepasste Rotationsform, insbesondere Kegelform und/oder Zylinderform und/oder zylindrisch konvexe Form, aufweist, wobei insbesondere eine sich verjüngende Ausprägung, insbesondere Spitze der Kegelform, mit einer Richtungskomponente in die Strömung des fließfähigen Mediums hinein ausgerichtet ist. Durch die individuelle Anpassung des Schwebekörpers ist eine genauere Messung und Überwachung möglich.

Erfindungsgemäß ist in dem Messgehäuseabschnitt ein Rohrleitungsabschnitt angeordnet, der ein Fenster aufweist, das überwiegend transparentes Material umfasst. Durch das Schauglas wird eine optische Visualisierung möglich und insbesondere die Funktion des Magnetmittels überprüfbar.

Vorteilhaft ist es, wenn das Magnetmittel rohrförmig ausgebildet ist, insbesondere ein oder mehrere, insbesondere umfassend zwei Magnetringmittel, wobei insbesondere ein Rohrmittel das Magnetmittel umgibt.

Vorteilhaft ist es, wenn durch Federmittel eine Gegenkraft gegen eine Ausschlagsbewegungskraft des Magnetmittels auszuüben ist.

Vorteilhaft ist es, wenn ein erstes Federmittel angeordnet ist in einem oberen Bereich des Messgehäuseabschnitts dem Führungsabschnitt entgegen und ein zweites Federmittel angeordnet ist in einem unteren Bereich auf einem Mitnahmebereich des Führungsabschnitts entgegen gegen einen unteren Bereich des Messgehäusabschnitts.

Vorteilhaft ist es, wenn in dem Messgehäuseabschnitt in dem oberen Bereich ein Entlüftungsmittel vorgesehen ist.

Vorteilhaft ist es, wenn der Positionssensor außen an dem Messgehäuseabschnitt in einer Höhe eines Schwankungsbereichs des Magnetmittels vorgesehen ist.

Vorteilhaft ist es, wenn ein oder mehrere Kanaladapter vorgesehen sind, an die eine Vorrichtung anzuschließen ist, wobei jeweils ein zu messender Volumenstrom in eine Vorrichtung abzweigbar ist.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: eine erfindungsgemäße Vorrichtung in Schnittdarstellung,
- Fig. 2: eine erfindungsgemäße Vorrichtung in perspektivischer Ansicht,
- Fig. 3: eine erfindungsgemäße Vorrichtung in Schnittdarstellung,
- Fig. 4a: einen Schwebekörper,
- Fig. 4b: einen Schwebekörper,
- Fig. 4c: einen Schwebekörper,
- Fig. 5a: eine Mehrfachanordnung von Vorrichtungen und
- Fig. 5b: eine erfindungsgemäße Vorrichtung.

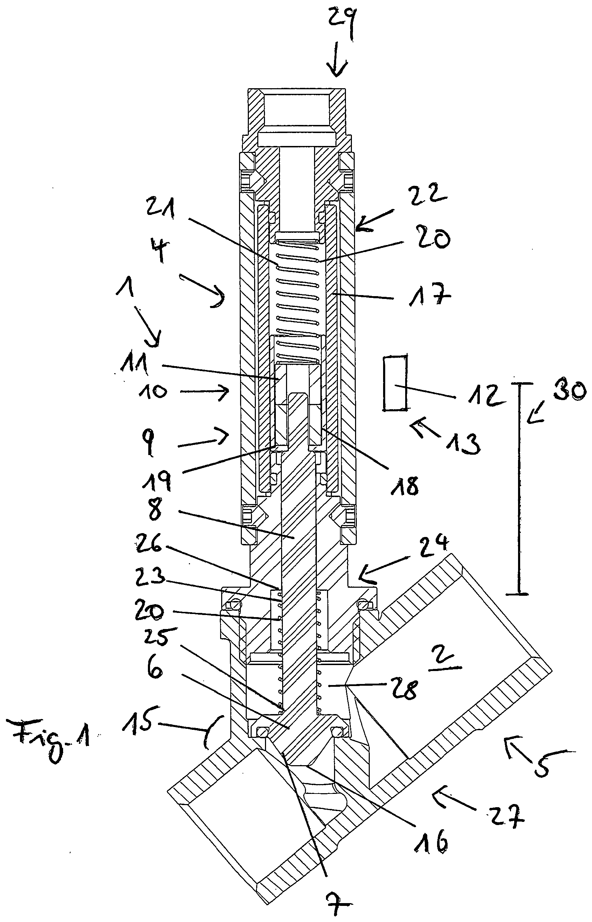

Fig. 1 zeigt eine erfindungsgemäße Vorrichtung 1 zur Bestimmung einer momentanen Durchflussrate eines fließfähigen Mediums 2 mit einem Messgehäuseabschnitt 4 zur Aufnahme von Messmitteln, mit einem Messleitungsabschnitt 5, durch den das fließfähige Medium 2 hindurch strömen kann, wodurch ein Schwebekörper 6, der mit einem Messabschnitt 7 in das fließfähige Medium 2 hineinragt, anhebbar ist, wobei der Schwebekörper 6 mit einem Führungsabschnitt 8 verbunden ist, der in den Messgehäuseabschnitt 4 hineinragt, wobei in einem Haltebereich 9, insbesondere Endbereich 10, des Führungsabschnitts 8 ein Magnetmittel 11 angeordnet ist, wobei benachbart zu dem Magnetmittel 11 an dem Haltebereich 9 des Führungsabschnitts 8 des Schwebekörpers 6 ein Positionssensor 12 für die Registrierung der Bewegung eines Magnetmittels 11 angeordnet ist, insbesondere ein Reed-Kontakt 13, im Wesentlichen ortsfest in Bezug auf den äußeren Messgehäuseabschnitt 4, wobei der Positionssensor 12, in schematischer Darstellung dargestellt, insbesondere der Reed-Kontakt 13, in Folge einer durch die Schwebekörperbewegung hervorgerufene Magnetmittelbewegung aktivierbar ist. Der Schwebekörper 6 weist eine Kegelform auf, wobei eine Spitze 16 der Kegelform mit einer Richtungskomponente in die Strömung des fließfähigen Mediums 2 hinein ausgerichtet ist.

Der Positionssensor kann in der Höhe verstellbar sein und mittels einer Skala am Gehäuse auf einen vorbestimmten Durchfluss innerhalb des Messbereichs einstellbar. Vorteilhaft ist auch ein Positionssensor, der ein analoges Signal liefert, das die Position des Schwebekörpers und damit den Durchfluss codiert. Ein derartiger Sensor kann auch nichtverstellbar ausgebildet sein.

In dem Messgehäuseabschnitt 4 ist ein Rohrleitungsabschnitt 16 angeordnet, der ein Fenster 17 aufweist, welches insbesondere überwiegend transparentes Material umfasst, wobei darauf insbesondere eine Skala zum Ablesen des Durchflusses vorgesehen ist. Das Magnetmittel 11 ist rohrförmig ausgebildet und umfasst zwei Magnetringmittel 18, wobei ein optionales Rohrmittel 19 das Magnetmittel 11 umgibt. Durch zwei Federmittel 20 wird eine Gegenkraft gegen eine zu weite Ausschlagsbewegungskraft des Magnetmittels 11 ausgeübt, so dass diese in einem vorbestimmten Ausschlagebereich verbleibt. Ein erstes Federmittel 21 ist in einem oberen Bereich 22 des Messgehäuseabschnitts 4 angeordnet dem Führungsabschnitt 8 entgegen und ein zweites Federmittel 23 - vorteilhaft kann auch, bei entsprechend angepasster Federkonstante, ein einziges Federmittel verwendet werden - ist in einem unteren Bereich 24 auf einem Mitnahmebereich 25 des Führungsabschnitts 8 angeordnet entgegen gegen einen unteren Bereich 26 des Messgehäuseabschnitts 4. Der Positionssensor ist insbesondere in einer vorbestimmten, angepassten Höhe 30 angebracht.

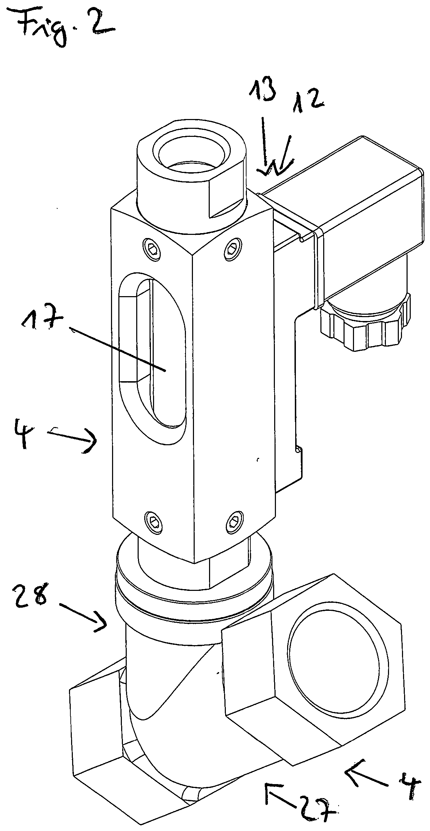

Fig. 2 zeigt eine erfindungsgemäße Vorrichtung 1 in perspektivischer Ansicht mit dem angesetzten Positionssensor, insbesondere einem Reed-Kontakt, der Messleitungsabschnitt 5 zumindest einen Teil 27 eines y-förmigen Rohrabschnitts umfasst, wobei an einen anderen Schenkel 28 der Messgehäuseabschnitt 4 anzusetzen ist. In dem Messgehäuseabschnitt 4 in dem oberen Bereich 22 ist ein Entlüftungsmittel 29 vorgesehen ist.

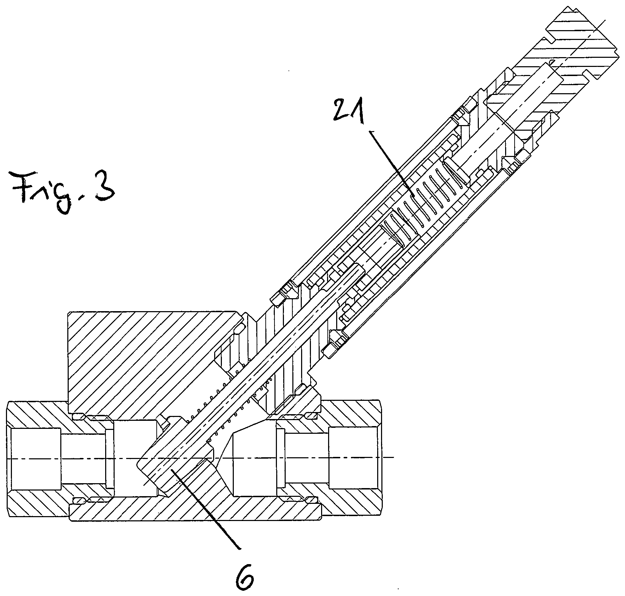

Fig. 3 zeigt eine erfindungsgemäße Vorrichtung 1 in Schnittdarstellung mit einem Schwebekörper 6 in einer der Strömung zugeneigten Winkelstellung.

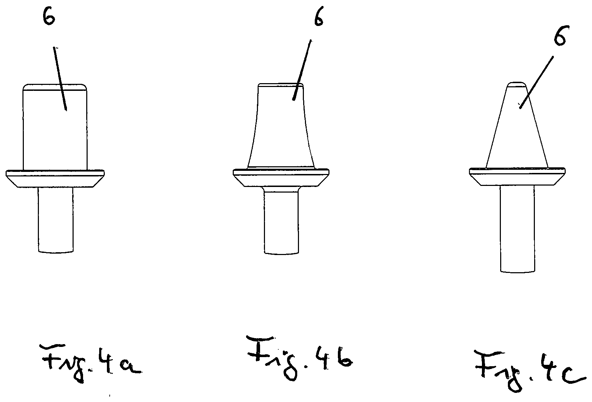

Fig. 4a, b, c zeigen Schwebekörper 6 mit unterschiedlichen Formen, die an eine unterschiedliche Strömungsform in Art und/oder Stärke angepasst sind. Fig. 4a zeigt einen Schwebekörper 6 in annähernd zylindrischer Form. Fig. 4b zeigt einen Schwebekörper 6 in annähernd zylindrisch konvexer Form. Fig. 4c zeigt einen Schwebekörper 6 in annähernd drehkegeliger Form.

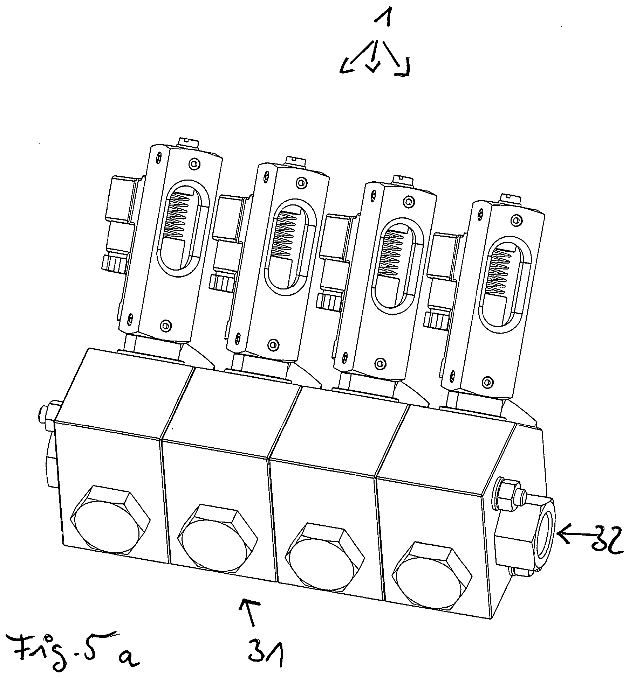

Fig. 5a zeigt eine Mehrfachanordnung von Vorrichtungen 1, die auf einem Kanaladapter aufgebaut sind, durch den ein Quervolumenstrom 32 fließen kann, von dem einzelne, zu messende Strömungen abzweigbar sind, die dann jeweils einer Vorrichtung 1 zuführbar sind.

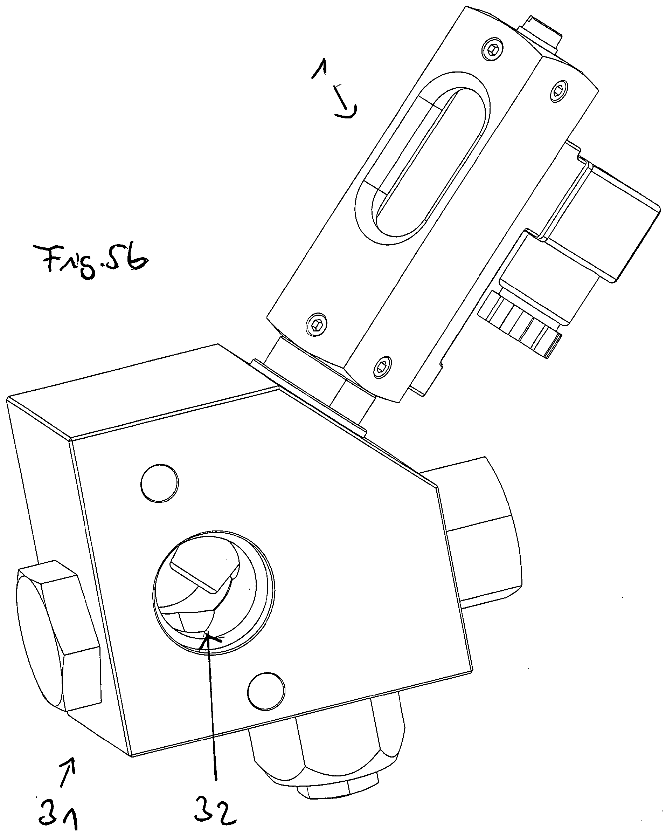

Fig. 5b zeigt eine erfindungsgemäße Vorrichtung 1 mit einem beispielhaften Kanaladapter 31 mit einem Durchlass für einen Quervolumenstrom 32.

### BEZUGSZEICHENLISTE

- 1: Vorrichtung
- 2: fließfähiges Medium
- 4: Messgehäuseabschnitt
- 5: Messleitungsabschnitt
- 6: Schwebekörper
- 7: Messabschnitt
- 8: Führungsabschnitt
- 9: Haltebereich
- 10: Endbereich
- 11: Magnetmittel
- 12: Positionssensor
- 13: Reed-Kontakt
- 15: Winkel
- 16: Rohrleitungsabschnitt
- 17: Fenster
- 18: Magnetringmittel
- 19: Rohrmittel
- 20: Federmittel
- 21: erstes Federmittel
- 22: oberer Bereich
- 23: zweites Federmittel
- 24: unterer Bereich
- 25: Mitnahmebereich
- 26: unterer Bereich
- 27: Teil
- 28: Abschnitt
- 29: Entlüftungsmittel
- 30: Höhe
- 31: Kanaladapter
- 32: Quervolumenstrom

## Patentansprüche

1. Vorrichtung (1) zur Bestimmung einer momentanen Durchflussrate eines fließfähigen Mediums (2) mit einem Messgehäuseabschnitt (4) zur Aufnahme von Messmitteln, mit einem Messleitungsabschnitt (5), durch den das fließfähige Medium (2) hindurch strömen kann, wodurch ein Schwebekörper (6), der mit einem Messabschnitt (7) in das fließfähige Medium (2) hineinragt, anhebbar ist, wobei der Schwebekörper (6) mit einem Führungsabschnitt (8) verbunden ist, der in den Messgehäuseabschnitt (4) hineinragt, wobei in einem Haltebereich (9), insbesondere Endbereich (10), des Führungsabschnitts (8) ein Signalmittel, ein Magnetmittel (11), angeordnet ist, wobei benachbart zu dem Signalmittel, Magnetmittel (11), an dem Haltebereich (9) des Führungsabschnitts (8) des Schwebekörpers (6) ein insbesondere höhenverstellbarer Positionssensor (12) für die Registrierung der Bewegung eines Signalmittels, Magnetmittels (11), angeordnet ist, insbesondere ein Reed-Kontakt (13) und/oder Hallsensor, im Wesentlichen ortsfest in Bezug auf den äußeren Messgehäuseabschnitt (4), wobei der Positionssensor (12), insbesondere der Reed-Kontakt (13) und/oder Hallsensor, in Folge einer durch die Schwebekörperbewegung hervorgerufene Magnetmittelbewegung aktivierbar ist, wobei der Messgehäuseabschnitt (4) an einem Seitenbereich (14) des Messleitungsabschnitts (5) angeordnet ist in einem vorbestimmten Winkel (15), insbesondere ungleich etwa 90°, in einem in Bezug auf eine Fließrichtung des fließfähigen Mediums (2) angepassten Winkel, wobei der Messleitungsabschnitt (5) zumindest einen Teil (27) eines y-förmigen Rohrabschnitts umfasst, wobei an einen anderen Schenkel (28) der Messgehäuseabschnitt (4) anzusetzen ist, wobei der Schwebekörper (6) eine zylindrisch konvexe und/oder annähernd drehkegelige Form aufweist, **dadurch gekennzeichnet, dass** in dem Messgehäuseabschnitt (4) ein Rohrleitungsabschnitt (16) angeordnet ist, der ein Fenster (17) aufweist, das überwiegend transparentes Material umfasst, so dass eine optische Erfassung der Position des Schwebekörpers möglich ist, beispielsweise durch eine Kamera oder licht- und/oder farbempfindliche Sensoren.

2. Vorrichtung nach Anspruch 1, **dadurch gekennzeichnet, dass** der Schwebekörper (6) eine angepasste Rotationsform, insbesondere Kegelform und/oder Zylinderform und/oder zylindrisch konvexe Form, aufweist, wobei insbesondere eine sich verjüngende Ausprägung, insbesondere Spitze (16) der Kegelform, mit einer Richtungskomponente in die Strömung des fließfähigen Mediums (2) hinein ausgerichtet ist.

3. Vorrichtung nach einem der Ansprüche 1 bis 2, **dadurch gekennzeichnet, dass** das Magnetmittel (11) rohrförmig ausgebildet ist, insbesondere ein oder mehrere, insbesondere umfassend zwei Magnetringmittel (18), wobei insbesondere ein Rohrmittel (19) das Magnetmittel (11) umgibt.

4. Vorrichtung nach einem der Ansprüche 1 bis 3, **dadurch gekennzeichnet, dass** durch Federmittel (20) eine Gegenkraft gegen eine Ausschlagsbewegungskraft des Magnetmittels (11) auszuüben ist.

5. Vorrichtung nach einem der Ansprüche 1 bis 4, **dadurch gekennzeichnet, dass** ein erstes Federmittel (21) angeordnet ist in einem oberen Bereich (22) des Messgehäuseabschnitts (4) dem Führungsabschnitt (8) entgegen und ein zweites Federmittel (23) angeordnet ist in einem unteren Bereich (24) auf einem Mitnahmebereich (25) des Führungsabschnitts (8) entgegen gegen einen unteren Bereich (26) des Messgehäuseabschnitts (4).

6. Vorrichtung nach einem der Ansprüche 1 bis 5, **dadurch gekennzeichnet, dass** in dem Messgehäuseabschnitt (4) in dem oberen Bereich (22) ein Entlüftungsmittel (29) vorgesehen ist.

7. Vorrichtung nach einem der Ansprüche 1 bis 6, **dadurch gekennzeichnet, dass** der Positionssensor (12) außen an dem Messgehäuseabschnitt (4) in einer Höhe (30) eines Schwankungsbereichs des Magnetmittels (11) vorgesehen ist.

8. Vorrichtung nach einem der Ansprüche 1 bis 7, **dadurch gekennzeichnet, dass** ein oder mehrere Kanaladapter (31) vorgesehen sind, an die eine Vorrichtung (1) anzuschließen ist, wobei jeweils ein zu messender Volumenstrom in eine Vorrichtung (1) abzweigbar ist.

## Claims

1. Device (1) for determining a current flow rate of a flowable medium (2) with a measuring housing section (4) for receiving measuring means, with a measuring line section (5) through which the flowable medium (2) can flow, whereby a floating body (6) that protrudes into the flowable medium (2) with a measuring section (7) can be raised, wherein the floating body (6) is connected to a guide section (8) that protrudes into the measuring housing section (4), wherein a signal means, a magnetic means (11), is arranged in a holding area (9), in particular end area (10), of the guide section (8), wherein a particularly height-adjustable position sensor (12) for recording the movement of a signal means, magnetic means (11), is arranged adjacent to the signal means, magnetic means (11), at the holding area (9) of the guide section (8) of the floating body (6), in particular a reed contact (13) and/or Hall sensor essentially fixed in relation to the outer measuring housing section (4), wherein the position sensor (12), in particular the reed contact (13) and/or Hall sensor, can be activated as a result of the magnetic medium movement caused by the floating body movement, wherein the measuring housing section (4) is arranged at a side area (14) of the measuring line section (5) at a predetermined angle (15), in particular not equal to approximately 90°, at an angle adapted to a flow direction of the flowable medium (2), wherein the measuring line section (5) comprises at least a part (27) of a Y-shaped pipe section, wherein the measuring housing section (4) is to be attached to another leg (28), wherein the floating body (6) has a cylindrically convex and/or approximately conical shape.

2. Device according to claim 1, **characterized in that** the floating body (6) has an adapted rotational shape, in particular a conical shape and/or a cylindrical shape and/or a cylindrically convex shape, wherein in particular a tapering feature, in particular a tip (16) of the conical shape, is oriented with a directional component into the flow of the flowable medium (2).

3. Device according to one of claims 1 to 2, **characterized in that** the magnetic means (11) is tubular, in particular one or more, in particular comprising two magnetic ring means (18), wherein in particular a tubular means (19) surrounds the magnetic means (11).

4. Device according to one of claims 1 to 3, **characterized in that** a counterforce against an excursion movement force of the magnetic means (11) is to be exerted by spring means (20).

5. Device according to one of claims 1 to 4, **characterized in that** a first spring means (21) is arranged in an upper region (22) of the measuring housing section (4) opposite the guide section (8) and a second spring means (23) is arranged in a lower region (24) on a carrying region (25) of the guide section (8) opposite a lower region (26) of the measuring housing section (4).

6. Device according to one of claims 1 to 5, **characterized in that** in the measuring housing section (4) in the upper region (22) an air vent (29) is provided.

7. Device according to one of claims 1 to 6, **characterized in that** the position sensor (12) is provided on the outside of the measuring housing section (4) at a height (30) of a fluctuation range of the magnetic medium (11).

8. Device according to one of claims 1 to 7, **characterized in that** one or more channel adapters (31) are provided to which a device (1) is to be connected, with a volume flow to be measured being branchable into a device (1) in each case.

## Revendications

1. Dispositif (1) servant a déterminer un débit instantané d'un milieu fluide (2) avec une partie de boîtier de mesure (4) pour recevoir des moyens de mesure, avec une partie de conduite de mesure (5) à travers laquelle le milieu fluide (2) peut s'écouler, permettant ainsi de soulever un corps flottant (6) qui s'étend dans le milieu fluide (2) avec une partie de mesure (7), la partie flottante (6) étant reliée à une partie de guidage (8) qui s'étend dans la partie de boîtier de mesure (4), dans laquelle une partie signal, un moyen magnétique (11), est située dans une zone de maintien (9), en particulier une zone d'extrémité (10), de la partie de guidage (8), une partie positionneur (12) particulièrement réglable en hauteur pour enregistrer le mouvement d'un moyen signal, moyen magnétique (11), étant située à proximité du moyen signal, moyen magnétique (11), sur la zone de maintien (9) de la partie de guidage (8) du corps flottant (6), en particulier un contact Reed (13) et/ou un capteur à effet Hall essentiellement fixe par rapport à la partie externe du boîtier de mesure (4), le capteur de position (12), en particulier le contact Reed (13) et/ou le capteur à effet Hall, pouvant être activé par le mouvement du milieu magnétique provoqué par le mouvement du corps flottant, la partie du boîtier de mesure (4) étant disposée sur un côté (14) de la partie du conduit de mesure (5) selon un angle prédéfini (15), en particulier différent d'environ 90°, selon un angle adapté à la direction du flux du milieu fluide (2) qui coule, la partie du conduit de mesure (5) comprenant au moins une partie (27) d'un tronçon de tuyau en forme de Y, une autre branche (28) étant utilisée pour fixer la partie du boîtier de mesure (4), le corps flottant (6) ayant une forme cylindrique convexe et/ou approximativement tronconique par le fait que dans la partie (4) du boîtier de mesure, un tronçon (16) de conduite est disposé, qui comporte une fenêtre (17) comportant un matériau principalement transparent, de sorte qu'une détection optique de la position du corps flottant est possible, par exemple par une caméra ou des capteurs sensibles à la lumière et/ou à la couleur.

2. Dispositif selon la revendication 1, **caractérisé en ce que** le corps flottant (6) présente une forme de rotation adaptée, en particulier une forme conique et/ou cylindrique et/ou une forme cylindrique convexe, où en particulier une caractéristique se rétrécissant, en particulier une pointe (16) de la forme conique, est orientée avec un composant de direction dans le flux du milieu fluide (2).

3. Dispositif selon l'une des revendications 1 à 2, **caractérisé en ce que** le moyen magnétique (11) est de forme tubulaire, en particulier un ou plusieurs, en particulier comprenant deux moyens de boucle magnétique (18), un moyen de tube (19) entourant en particulier le moyen magnétique (11).

4. Dispositif selon l'une des revendications 1 à 3, **caractérisé en ce qu'**un ressort (20) est utilisé pour exercer une force de réaction contre une force de mouvement de déviation du moyen magnétique (11).

5. Dispositif selon l'une des revendications 1 à 4, **caractérisé en ce qu'**un premier moyen de ressort (21) est disposé dans une zone supérieure (22) de la section de boîtier de mesure (4) en direction du segment de guidage (8) et un deuxième moyen de ressort (23) est disposé dans une zone inférieure (24) sur une zone de prise en charge (25) du segment de guidage (8) en direction d'une zone inférieure (26) de la section de boîtier de mesure (4).

6. Dispositif selon l'une des revendications 1 à 5, **caractérisé en ce que** dans la partie de boîtier de mesure (4), dans la partie supérieure (22), un dispositif de dégazage (29) est prévu.

7. Dispositif selon l'une des revendications 1 à 6, **caractérisé en ce que** le capteur de position (12) est disposé à l'extérieur du compartiment de boîtier de mesure (4) à une hauteur (30) d'une plage de fluctuation du moyen magnétique (11).

8. Dispositif selon l'une des revendications 1 à 7, **caractérisé en ce qu'**un ou plusieurs adaptateurs de canal (31) sont prévus pour connecter un dispositif (1), chaque dispositif (1) pouvant dévier un débit volumétrique à mesurer.
